# FASCICULE DE BREVET EUROPEEN

(11) **EP 3 233 609 B1**
(45) Date de publication et mention de la délivrance du brevet: **14.08.2019**
(21) Numéro de dépôt: 15816815.3
(22) Date de dépôt: 16.11.2015
(51) Int. Cl.: B62D 25/08

(54) **STRUCTURE DE FACE AVANT TECHNIQUE DE VEHICULE AUTOMOBILE PARTIELLEMENT DEMONTABLE**
TEILWEISE ENTFERNBARE TECHNISCHE FRONTSTRUKTUR FÜR KRAFTFAHRZEUG
PARTIALLY REMOVABLE MOTOR VEHICLE TECHNICAL FRONT END STRUCTURE

(30) Priorité: 18.12.2014 FR 1462751
(43) Date de publication de la demande: 25.10.2017
(73) Titulaire: Renault S.A.S., 92100 Boulogne-Billancourt (FR)
(72) Inventeur: AESCHLIMANN, Jean Louis, 78390 Bois D'arcy (FR); FLANDIN, Michael, 28410 Broue (FR)
(86) Numéro de dépôt international: PCT/FR2015/053085
(87) Numéro de publication internationale: WO 2016/097510

(56) Documents cités:
- EP-A2- 2 284 066
- FR-A1- 2 912 107
- JP-A- 2005 035 435
- US-A1- 2007 182 211
- US-A1- 2011 133 517

## Description

L'invention concerne une structure de face avant technique de véhicule automobile partiellement démontable. L'invention concerne notamment les structures monobloc comprenant des inserts de renfort assemblés par un matériau polymère, sans soudage ou vissage de ces derniers. En particulier, les inserts de renfort sont assemblés uniquement par le matériau polymère les recouvrant au moins partiellement.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

Pour un gain en compacité et en masse, certaines FAT forment un cadre obtenu par assemblage de deux traverses par des montants verticaux, ce cadre comprenant des inserts de renfort recouverts au moins partiellement de matériau polymère.

Pour assurer la rigidité d'un tel cadre, il s'avère nécessaire d'assembler les inserts de renfort entre eux. Cette fixation peut être réalisée avant de recouvrir les inserts d'un matériau polymère, par exemple par soudage, vissage ou rivetage, ou après, généralement par vissage ou rivetage. Ces opérations de fixation nécessitent cependant des opérations de positionnement et de fixation qui complexifient le procédé d'assemblage et augmentent les coûts d'assemblage. En outre, ce type d'agencements ne permet pas de démonter les éléments du cadre en maintenance.

Certaines solutions consistent à créer une zone de recouvrement et d'encastrement des inserts avant de les recouvrir de matériau polymère, cette zone d'encastrement présentant une forme en T. Cette solution permet d'obtenir un assemblage robuste sans opération de soudage, vissage ou rivetage, mais résulte en un assemblage volumineux et lourd et ne permet pas un démontage des éléments encastrés en maintenance.

D'autres solutions consistent à réaliser une structure en deux parties distinctes inférieure et supérieure, chaque partie comprenant des portions de montants verticaux. Un tel assemblage permet un démontage en maintenance mais est cependant volumineux et les deux parties ne sont pas reliées entre elles.

Une autre solution consiste enfin à positionner les inserts de sorte qu'ils ne se touchent pas et à les enrober de matériaux polymère. La tenue mécanique de cet assemblage résulte alors uniquement du matériau polymère reliant les inserts et est relativement limitée. Cette solution ne permet pas non plus une séparation ou un démontage des inserts en maintenance.

Le document FR 2 912 107 A1 décrit une structure de face avant technique selon le préambule de la revendication 1.

Il existe donc un besoin pour une structure robuste et légère qui peut être réalisée de manière simple et peu coûteuse et qui soit partiellement démontable.

L'invention vise à pallier ces inconvénients en proposant une structure de face avant technique de véhicule automobile comprenant un cadre formé de deux montants latéraux parallèles et de deux traverses supérieure et inférieure reliant les montants latéraux, caractérisée en ce que :
- la traverse inférieure et les deux montants latéraux forment un ensemble monobloc,
- chaque montant latéral présente à son extrémité libre un logement à l'intérieur duquel est insérée une extrémité de la traverse supérieure, et
- chaque extrémité de la traverse supérieure est maintenue à l'intérieur dudit logement par des éléments de fixation réversible.

Un tel agencement permet un assemblage simple et robuste de la traverse à l'ensemble monobloc, ce dernier pouvant être réalisé séparément. Une telle structure autorise un accès simple direct au groupe moto-ventilateur en maintenance avec un nombre réduit de pièces démontables. La fixation est dite réversible lorsqu'elle n'est pas définitive et rend possible un démontage des pièces assemblées. Une telle fixation réversible peut par exemple être obtenue par des éléments tels que des systèmes vis-écrous ou analogues.

Les logements peuvent être agencés de manière à ce que la traverse supérieure soit insérée dans les logements suite à un mouvement adapté à la configuration autour de la structure. Il peut s'agir ainsi d'un mouvement suivant une direction oblique, perpendiculaire aux montants ou parallèle aux montants latéraux.

Toutefois, pour une réalisation plus simple de la structure, avantageusement, ce mouvement est parallèle aux montants latéraux.

Avantageusement, chaque logement peut présenter une section en U dans un plan perpendiculaire à une direction longitudinale de la traverse supérieure. Une telle forme présente l'avantage d'être simple à réaliser.

Dans un mode de réalisation, chaque logement peut être réalisé d'une pièce avec un montant vertical.

Selon l'invention, chaque logement est défini par une pièce distincte du montant latéral solidarisée à ce dernier. Ceci permet d'obtenir un logement présentant une forme adaptée à une traverse particulière. Notamment, il est ainsi possible de réaliser un même ensemble monobloc servant de base pour réaliser différentes structures présentant des formes de traverses supérieures différentes. Il suffit alors de modifier la forme du logement à solidariser à l'ensemble monobloc pour adapter celui-ci à une traverse particulière.

Cette pièce distincte définissant un logement est solidarisée à un montant latéral par un matériau polymère recouvrant au moins partiellement ladite pièce et le montant latéral. Un tel agencement présente l'avantage d'être simple, notamment lorsque l'ensemble monobloc est également réalisé par assemblage d'inserts de renfort au moyen d'un matériau polymère. La pièce distincte peut alors être solidarisée à un insert de renfort lors de la réalisation de l'ensemble monobloc.

Avantageusement, chaque pièce distincte est en appui contre au moins deux surfaces distinctes d'un montant latéral, notamment au moins deux surfaces distinctes adjacentes, ce qui permet d'améliorer la robustesse du logement.

La pièce distincte définissant un logement est de préférence métallique.

Avantageusement, le matériau polymère peut former des nervures de renfort disposées autour de chaque pièce distincte. Notamment, de telles nervures sont disposées du côté de la pièce supportant le plus le poids de la traverse.

Alternativement ou en combinaison, le matériau polymère peut former une partie du logement, par exemple une paroi ou une portion de paroi pour un meilleur maintien de l'extrémité de la traverse.

Dans un mode de réalisation, la traverse supérieure peut être un profilé creux fermé, notamment métallique ou en métal partiellement recouvert de matériau polymère.

Dans un autre mode de réalisation, la traverse supérieure peut être un profilé ouvert, en métal seul ou partiellement recouvert de matériau polymère.

Notamment, la traverse à profilé ouvert peut comprendre un insert de renfort longitudinal au moins partiellement recouvert de matériau polymère, ledit insert de renfort définissant une section transversale ouverte concave. En particulier, l'insert de renfort peut présenter une paroi de fond et deux parois latérales, chaque paroi latérale étant reliée à un bord longitudinal de la paroi de fond de manière à définir une section transversale ouverte concave, notamment sensiblement en forme de U ou Ω.

Avantageusement, chaque extrémité de la traverse présente alors, à l'intérieur de la concavité définie par l'insert de renfort, une entretoise assemblée à l'insert de renfort par le matériau polymère, ladite entretoise définissant un orifice de passage, notamment cylindrique, pour un élément de fixation de la traverse au logement. Un tel orifice cylindrique peut, par exemple, recevoir un élément de fixation réversible tel qu'un goujon, une tige filetée ou analogue. L'axe de cet orifice cylindrique peut s'étendre avantageusement perpendiculairement à la paroi de fond de l'insert de renfort laquelle s'étend parallèlement aux montants verticaux. L'entretoise s'étend alors depuis un orifice de la paroi de fond. Il est ainsi possible de faire passer l'élément de fixation au travers des parois du logement, via des orifices prévus à cet effet, l'élément de fixation traversant entièrement la traverse. Dans le cas d'un élément de fixation sous forme de vis, un écrou peut être solidarisé au logement pour faciliter les opérations de fixation ou de démontage. Un tel écrou peut par exemple être serti ou soudé au logement.

Avantageusement, l'entretoise peut être maintenue par des nervures de matériau polymère, s'étendant notamment parallèlement à l'axe de l'orifice.

De préférence, cette entretoise est en matériau métallique.

En outre, chaque extrémité de la traverse peut présenter une forme complémentaire ou sensiblement complémentaire du logement dans lequel elle doit être insérée pour une meilleure stabilité de l'assemblage. Cette forme complémentaire peut être obtenue par le matériau polymère recouvrant partiellement la traverse, par exemple sous forme de nervures de forme adaptée.

Avantageusement et de manière non limitative, les montants latéraux et la traverse inférieure de l'ensemble monobloc peuvent comprendre chacun un insert de renfort longitudinal, lesdits inserts de renfort étant assemblés par un matériau polymère les recouvrant au moins partiellement. En particulier, chaque insert de renfort peut présenter une paroi de fond et deux parois latérales, chaque paroi latérale étant reliée à un bord longitudinal de la paroi de fond de sorte qu'un insert de renfort présente une section transversale ouverte concave, notamment sensiblement en forme de U ou Ω, les directions longitudinales desdits inserts de renfort étant sensiblement perpendiculaires et les inserts de renfort étant orientés de sorte que leur concavité soit dirigée dans une même direction.

Dans les différents modes de réalisation décrits ci-dessus, le matériau polymère peut être du polypropylène ou un polyamide.

Les inserts de renfort peuvent être métalliques, on parle alors d'assemblage hybride, ou en matériau polymère. Les inserts de renfort peuvent par exemple être en aluminium, en alliage à base d'aluminium ou en acier, notamment en acier inoxydable. Ils peuvent également être en polypropylène ou polyamide, éventuellement renforcé, par exemple par des fibres de verre, des fibres de carbone ou autres, ou tout autre matériau polymère présentant la rigidité recherchée.

L'invention concerne également un véhicule équipée d'une structure de face avant technique selon l'invention.

L'invention est maintenant décrite en référence aux dessins annexés, non limitatifs, dans lesquels :
- la figure 1 représente une vue en perspective d'une structure de face avant technique selon un mode de réalisation de l'invention ;
- la figure 2 représente une vue éclatée des inserts de renfort de la structure représentée figure 1 ;
- la figure 3a représente une vue en perspective partielle avant de la structure de la figure 1 et la figure 3b représente une vue en perspective partielle arrière ;
- la figure 4 est une vue en perspective de la traverse supérieure de la structure représentée figure 1 et la figure 4a est un agrandissement de la figure 4 ;
- la figure 5a est une section éclatée de la zone d'assemblage de la traverse supérieure à la structure de la figure 1, la figure 5b est une section assemblée de la même zone.

Sur les figures, les mêmes éléments sont désignés par les mêmes références.

Dans la présente description, les termes avant, arrière, supérieur, inférieur, font référence aux directions avant et arrière du véhicule, lorsque l'assemblage est monté sur un véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

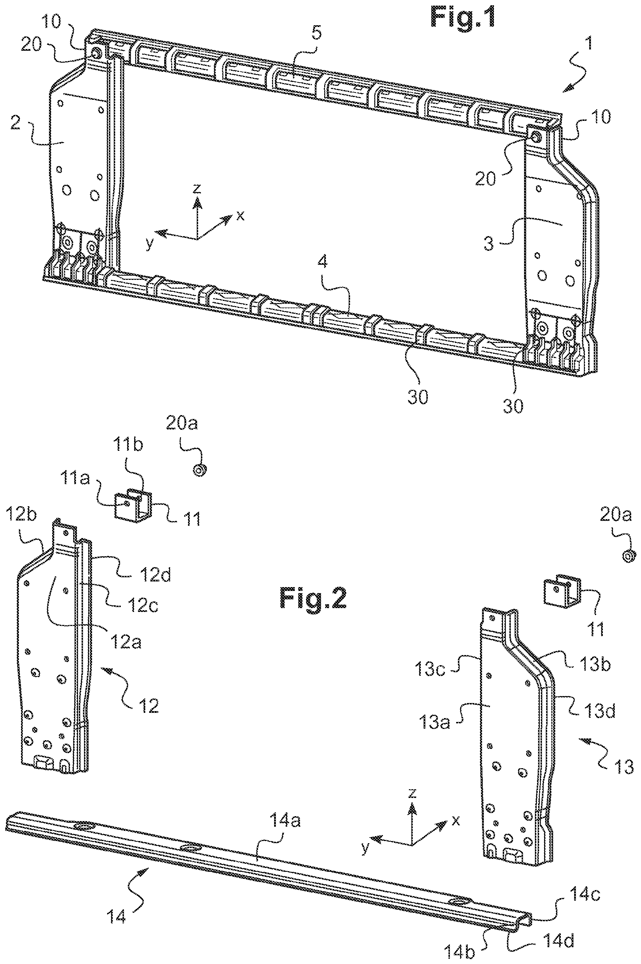

La figure 1 représente une structure de face avant technique 1 d'un véhicule automobile. Cette structure 1 se présente ici sous la forme d'un cadre comprenant deux montants latéraux parallèles 2, 3, une traverse inférieure 4 et une traverse supérieure 5, également parallèles entre elles.

Selon l'invention, la traverse inférieure 4 et les deux montants latéraux 2, 3 forment un ensemble monobloc, autrement dit un ensemble non démontable. Seule la traverse supérieure 5 est ainsi démontable. A cet effet, chaque montant latéral 2, 3 présente à son extrémité libre supérieure un logement 10 à l'intérieur duquel est insérée une extrémité de la traverse supérieure 5 et chaque extrémité de la traverse supérieure 5 est maintenue à l'intérieur du logement 10 par des éléments 20 de fixation réversible. Ces différents éléments sont décrits plus en détails en référence aux figures 2 à 5. Dans l'exemple représenté, les logements 10 sont agencés de manière à ce que la traverse supérieure 5 soit insérée dans les logements 10 suite à un mouvement parallèle aux montants latéraux 2, 3, ici un mouvement vertical.

Dans l'exemple représenté, chaque élément de l'ensemble monobloc comprend un insert de renfort recouvert au moins partiellement de matériau polymère. Ces inserts de renfort sont représentés sur la figure 2. Ainsi, chacun des montants latéraux 2, 3 comprend un insert de renfort longitudinal 12, 13 respectivement et la traverse inférieure 4 comprend un insert de renfort longitudinal 14.

Chaque insert de renfort longitudinal 12, 13, 14, présente une section transversale ouverte concave. Ici, il s'agit d'une forme sensiblement en Ω ou en U, formée par des parois planes ou sensiblement planes. Autrement dit, l'insert de renfort est formé de plusieurs parois planes reliées les unes aux autres par un bord longitudinal, de section transversale similaire à un Ω ou à un U.

Ainsi, l'insert 12, 13 comprend une paroi de fond 12a, 13a et deux parois latérales 12b, 12c ; 13b, 13c de part et d'autre de la paroi de fond 12a, 13a. Chacune de ces parois latérales 12b, 12c ; 13b, 13c présente un rebord 12d, 13d s'étendant parallèlement à la paroi de fond 12a, 13a, à l'extérieur de l'insert. De manière similaire, l'insert 14 comprend une paroi de fond plane 14a encadrée par deux parois latérales 14b, 14c, chacune de ces parois latérales 14b et 14c présentant un rebord 14d dirigé vers l'extérieur de l'insert. Chaque paroi latérale est ainsi reliée à un bord longitudinal de la paroi de fond à laquelle elle est rattachée.

Dans l'exemple représenté, les parois de fond 12a, 13a sont parallèles, sensiblement dans un même plan. En outre, les inserts de renfort 12, 13 sont orientés de sorte que chaque concavité qu'ils définissent soit dirigée dans une même direction (axe X des figures). Quand à l'insert de renfort 14, sa concavité est dirigée dans la direction opposée aux inserts de renfort 12, 13. Ceci permet de faciliter les opérations de surmoulage du matériau polymère sur les inserts de renfort 12, 13, 14. Ce surmoulage est par exemple réalisé par injection dans un outillage réalisé en plusieurs parties. Les inserts 12, 13, 14 sont ainsi disposés dans un moule dans la position qu'ils occuperont dans la structure finalisée, leur assemblage étant obtenu par surmoulage d'un matériau polymère 30 les recouvrant partiellement.

Dans l'exemple représenté, chaque logement 10 est défini par une pièce 11 distincte des inserts de renfort 12, 13. Cette pièce 11 présente une section transversale en forme de U, tel que visible sur la figure 2. Dans l'exemple, ces pièces 11 sont des pièces en métal embouti en forme de U. Chaque pièce 11 présente en outre des orifices correspondants 11a, 11b sur ses ailes pour le passage des éléments 20 de fixation réversible. Ici, un écrou 20a est soudé sur chaque pièce 11 au niveau de son orifice 11b, sur une face externe de la pièce 11.

Chacune des pièces 11 est assemblée à un insert de renfort 12, 13 par le matériau polymère assurant l'assemblage des inserts de renfort 12, 13, 14 entre eux. Par exemple, ces pièces 11 sont mises en place en même temps que les inserts de renfort 12-14 dans le moule de réalisation de l'ensemble monobloc, puis le matériau polymère est injecté afin de réaliser l'assemblage. On notera que l'utilisation d'une pièce 11 en forme de U positionnée tel que représenté sur les figures facilite l'opération de moulage en utilisant un moule en plusieurs parties, notamment deux parties assemblées suivant un plan parallèle au plan des parois de fond 12a, 13a des inserts, une partie mobile suivant la direction longitudinale des montants latéraux du côté de la concavité de la traverse inférieure et une partie mobile également suivant la direction longitudinale des montants latéraux mais du côté des logements.

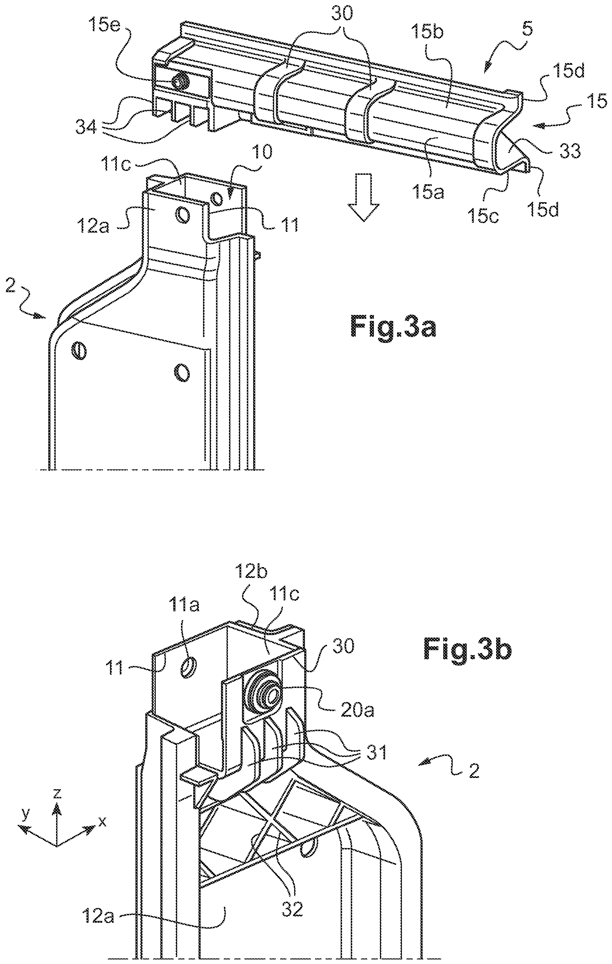

Dans l'exemple représenté, les pièces 11 sont en appui sur une portion d'extrémité de la paroi de fond 12a, 13a ainsi que sur une partie d'extrémité de la paroi latérale 12b, 13b des inserts de renfort 12, 13 respectivement. Ceci est visible sur la figure 2 ainsi que sur les figures 3a et 3b montrant le montant latéral 2 comprenant l'insert de renfort 12, l'agencement du montant latéral 3 étant similaire. Cet agencement permet un bon positionnement des pièces 11 et permet également de les renforcer dans les directions perpendiculaires aux parois sur lesquelles elles sont en appui.

Le matériau polymère assurant l'assemblage de chaque pièce 11 à un insert de renfort 12, 13 peut former une partie du logement. C'est le cas ici, tel que visible sur les figures 3a, 3b, la pièce 11 présentant une paroi 11c reliant ces deux ailes et sa base. La portion de paroi de fond 12a étant noyée dans cette paroi 11c, cette dernière est ainsi renforcée. Ainsi, lorsque la traverse est insérée dans le logement, elle ne peut en être extraite que par l'ouverture supérieure du logement 10, aucun autre mouvement n'étant possible.

Tel que visible sur la figure 3b, le matériau polymère forme des nervures de renfort 31 situées sous la pièce 11 et en partie sur un côté, ici sur le côté opposé à la paroi de fond 12a de l'insert de renfort. Ces nervures de renfort 31 s'étendent perpendiculairement aux parois de la pièce 11 (figure 3b).

Chaque insert de renfort peut en outre comprendre une pluralité de nervures 32 s'étendant perpendiculairement à sa paroi de fond, à l'intérieur de sa concavité définie tel que visible sur la figure 3b.

La traverse supérieure 5 démontable de l'exemple des figures 1-5 est réalisée de manière similaire et comprend un insert de renfort longitudinal 15 au moins partiellement recouvert de matériau polymère 30 (figures 3a, 4, 4a, 5a, 5b). L'insert de renfort 15 présente une section transversale ouverte concave. Ici, il s'agit d'une forme sensiblement en Ω ou en U. L'insert de renfort 15 présente comprend une paroi de fond 15a et deux parois latérales 15b, 15c de part et d'autre de la paroi de fond 15a. Chacune de ces parois latérales 15b, 15c présente un rebord 15d s'étendant parallèlement à la paroi de fond 15a, à l'extérieur de l'insert 15. Un réseau de nervures 33 disposées en croisillons à l'intérieur de la concavité définie par l'insert de renfort 15 permettent de renforcer ce dernier.

L'extrémité de la traverse 5 est insérée à l'intérieur d'un logement 10 suivant la direction de la flèche représentée figure 3a lors du montage de la structure 1. Dans l'exemple représenté, la traverse 5 présente un réseau de nervures 34 à ses extrémités disposées sur une face externe de la traverse 5 et conformées pour épouser la forme du logement 10. Autrement dit, le matériau polymère recouvrant partiellement la traverse 5 permet de donner à l'extrémité de la traverse une forme complémentaire ou sensiblement complémentaire du logement 10 dans lequel elle doit être insérée, et ceci, quelque soit la forme externe de la traverse 5. Ceci permet de réaliser facilement une extrémité pouvant s'encastrer dans le logement et d'améliorer ainsi la stabilité de la traverse à l'intérieur du logement.

On notera dans le présent exemple que la concavité de la traverse supérieure 5 est orientée dans la même direction que la concavité des montants 2, 3. Autrement dit, les parois de fond 12a, 13a, 15a des inserts de renfort 12, 13, 15 s'étendent sensiblement dans un même plan.

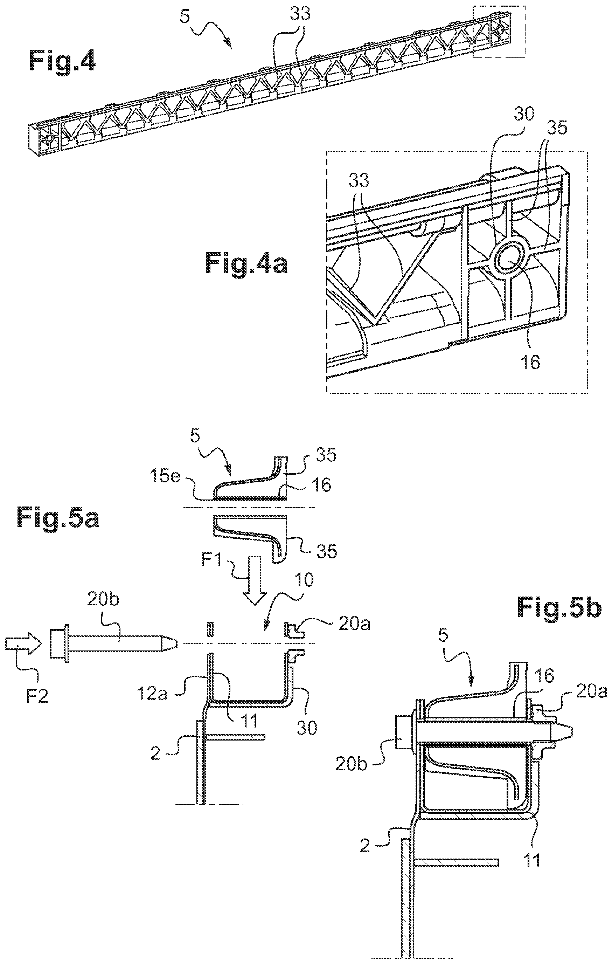

Afin de permettre sa fixation, chaque extrémité de la traverse présente un orifice 15e dans sa paroi de fond 15a, et dans le prolongement de cet orifice 15e, une entretoise 16 définissant un orifice de passage cylindrique pour le passage d'un élément de fixation de la traverse au logement. Cette entretoise 16 est disposée à l'intérieur de la concavité définie par l'insert de renfort 15. Elle est de préférence en métal et est assemblée à l'insert de renfort 15 par le matériau polymère, tel que visible plus particulièrement sur les figures 4 et 4a. Notamment, le matériau polymère entoure entièrement l'entretoise 16 et la relie à l'insert de renfort via des nervures 35 en croix.

On notera ainsi que d'une part l'ensemble monobloc comprenant la traverse inférieure 4 et les montants latéraux 2, 3 et d'autre part la traverse supérieure 5 sont réalisés séparément puis assemblés pour former une structure 1 de face avant technique.

Cet assemblage est maintenant décrit en référence aux figures 5a et 5b. La traverse supérieure 5, en position horizontale, est déplacée verticalement suivant la flèche F1 de la figure 5a jusqu'à ce que son extrémité soit disposée à l'intérieur du logement 10 des montants latéraux 2, 3. Une fois insérée dans les logements 10, les éléments 20 de fixation réversible sont mis en place. Il s'agit ici, pour chaque extrémité de la traverse 5, d'une vis 20b que l'on insère au travers de l'orifice 11a du logement 10 suivant la direction de la flèche F2, à l'intérieur de l'entretoise 16 de la traverse 5 et qui peut être serrée au moyen de l'écrou 20a solidaire du logement 10. On comprend qu'il est tout aussi aisé de démonter la traverse 5 en réalisant ces opérations en sens inverse.

L'invention a été décrite en référence à une traverse supérieure comprenant un insert de renfort recouvert partiellement de matériau polymère. L'invention n'est toutefois pas limitée à une forme particulière de traverse supérieure. Notamment, la traverse supérieure pourrait être un profilé à section fermée, par exemple à section rectangulaire ou carrée. La traverse peut alors être entièrement réalisée en métal, bien qu'une traverse hybride soit également envisageable. On comprend également que la forme des logements 10 peut être plus complexe notamment pour recevoir une traverse de forme particulière.

L'invention n'est pas limitée non plus à une forme particulière des inserts de renfort décrits, ni à une forme particulière de l'ensemble monobloc, pourvu que l'ensemble monobloc puisse recevoir des logements pour la traverse. Une forme en U de l'ensemble monobloc est toutefois préférée pour des raisons de robustesse et de simplicité de réalisation.

## Revendications

1. Structure (1) de face avant technique de véhicule automobile comprenant un cadre formé de deux montants latéraux (2, 3) parallèles et de deux traverses supérieure (5) et inférieure (4) reliant les montants latéraux (2, 3), dans laquelle :
- la traverse inférieure (4) et les deux montants latéraux (2, 3) forment un ensemble monobloc,
- chaque montant latéral (2, 3) présente à son extrémité libre un logement (10) à l'intérieur duquel est insérée une extrémité de la traverse supérieure (5), et
- chaque extrémité de la traverse supérieure (5) est maintenue à l'intérieur dudit logement (10) par des éléments (20) de fixation réversible,
**caractérisée en ce que** chaque logement (10) est défini par une pièce (11) distincte du montant latéral (2, 3) solidarisée à ce dernier par un matériau polymère (30) recouvrant au moins partiellement ladite pièce et le montant latéral.

2. Structure (1) selon la revendication 1, **caractérisée en ce que** les logements sont agencés de manière à ce que la traverse supérieure (5) soit insérée dans les logements (10) suite à un mouvement parallèle aux montants latéraux.

3. Structure (1) selon l'une quelconque des revendications 1 ou 2, **caractérisée en ce que** le matériau polymère (30) forme des nervures de renfort (31) disposées autour de chaque pièce (11) et/ou forme une partie (11c) du logement (10).

4. Structure (1) selon l'une quelconque des revendications 1 à 3, **caractérisée en ce que** la traverse supérieure (5) est un profilé creux fermé ou un profilé ouvert, en métal ou en métal partiellement recouvert de matériau polymère.

5. Structure (1) selon l'une quelconque des revendications 1 à 4, **caractérisée en ce que** la traverse supérieure (5) comprend un insert de renfort (15) longitudinal au moins partiellement recouvert de matériau polymère (30), ledit insert de renfort (15) définissant une section transversale ouverte concave et **en ce que** chaque extrémité de la traverse présente, à l'intérieur de sa concavité, une entretoise (16) assemblée à l'insert de renfort (12) par le matériau polymère (30), ladite entretoise (16) définissant un orifice de passage pour un élément de fixation de la traverse au logement.

6. Structure (1) selon la revendication 5, **caractérisée en ce que** l'entretoise (16) est maintenue par des nervures (34) de matériau polymère.

7. Structure (1) selon l'une quelconque des revendications précédentes, **caractérisée en ce que** les montants latéraux (2, 3) et la traverse inférieure (14) de l'ensemble monobloc comprennent chacun un insert de renfort longitudinal (12, 13, 14), lesdits inserts de renfort étant assemblés par un matériau polymère les recouvrant au moins partiellement.

8. Véhicule comprenant une structure (1) de face avant technique selon l'une quelconque des revendications 1 à 7.

## Patentansprüche

1. Technische Frontstruktur (1) eines Kraftfahrzeugs, umfassend einen Rahmen, der aus zwei parallelen seitlichen Pfosten (2, 3) und aus zwei Querstreben, einer oberen (5) und einer unteren (4), die die seitlichen Pfosten (2, 3) verbinden, ausgebildet ist, wobei:
- die untere Querstrebe (4) und die beiden seitlichen Pfosten (2, 3) eine einstückige Einheit ausbilden,
- jeder seitliche Pfosten (2, 3) an seinem freien Ende eine Aufnahme (10) aufweist, in deren Inneres ein Ende der oberen Querstrebe (5) eingesetzt ist, und
- jedes Ende der obere Querstrebe (5) innerhalb der Aufnahme (10) durch reversible Befestigungselemente (20) gehalten wird,
**dadurch gekennzeichnet, dass** jede Aufnahme (10) durch ein vom seitlichen Pfosten (2, 3) getrenntes Bauteil (11) definiert ist, das mit diesem durch ein Polymermaterial (30) verbunden ist, welches das Bauteil und den seitlichen Pfosten zumindest teilweise bedeckt.

2. Struktur (1) nach Anspruch 1, **dadurch gekennzeichnet, dass** die Aufnahmen so angeordnet sind, dass die obere Querstrebe (5) nach einer zu den seitlichen Pfosten parallelen Bewegung in die Aufnahmen (10) eingeführt wird.

3. Struktur (1) nach einem der Ansprüche 1 oder 2, **dadurch gekennzeichnet, dass** das Polymermaterial (30) Verstärkungsrippen (31) ausbildet, die um jedes Bauteil (11) angeordnet sind, und/oder einen Teil (11c) der Aufnahme (10) ausbildet.

4. Struktur (1) nach einem der Ansprüche 1 bis 3, **dadurch gekennzeichnet, dass** die obere Querstrebe (5) ein geschlossenes Hohlprofil oder ein offenes Profil aus Metall oder aus teilweise mit Polymermaterial beschichtetem Metall ist.

5. Struktur (1) nach einem der Ansprüche 1 bis 4, **dadurch gekennzeichnet, dass** die obere Querstrebe (5) einen Längsverstärkungseinsatz (15) umfasst, der zumindest teilweise mit Polymermaterial (30) beschichtet ist, wobei der Verstärkungseinsatz (15) einen offenen konkaven Querabschnitt definiert, und dadurch, dass jedes Ende der Querstrebe innerhalb seiner Konkavität einen Steg (16) aufweist, der durch das Polymermaterial (30) mit dem Verstärkungseinsatz (12) verbunden ist, wobei der Steg (16) eine Durchgangsöffnung für ein Element zur Befestigung der Querstrebe an der Aufnahme definiert.

6. Struktur (1) nach Anspruch 5, **dadurch gekennzeichnet, dass** der Steg (16) durch Rippen (34) aus Polymermaterial gehalten wird.

7. Struktur (1) nach einem der vorangehenden Ansprüche, **dadurch gekennzeichnet, dass** die seitlichen Pfosten (2, 3) und die untere Querstrebe (14) der einstückigen Einheit jeweils einen Längsverstärkungseinsatz (12, 13, 14) umfassen, wobei die Verstärkungseinsätze durch ein Polymermaterial verbunden sind, das sie zumindest teilweise bedeckt.

8. Fahrzeug, umfassend eine technische Frontstruktur (1) nach einem der Ansprüche 1 bis 7.

## Claims

1. Structure (1) of a technical front end module of a motor vehicle comprising a frame formed of two parallel lateral uprights (2, 3) and of two, upper (5) and lower (4) cross members connecting the lateral uprights (2, 3), in which structure:
- the lower cross member (4) and the two lateral uprights (2, 3) form a one-piece assembly,
- each lateral upright (2, 3) at its free end has a housing (10) into which one end of the upper cross member (5) is inserted, and
- each end of the upper cross member (5) is held inside the said housing (10) by reversible-fixing elements (20),
**characterized in that** each housing (10) is defined by a component (11) distinct from the lateral upright (2, 3) and secured to the latter by a polymer material (30) at least partially covering the said component and the lateral upright.

2. Structure (1) according to Claim 1, **characterized in that** the housings are arranged in such a way that the upper cross member (5) is inserted into the housings (10) following a movement parallel to the lateral uprights.

3. Structure (1) according to either one of Claims 1 and 2, **characterized in that** the polymer material (30) forms reinforcing ribs (31) positioned around each component (11) and/or forms part (11c) of the housing (10) .

4. Structure (1) according to any one of Claims 1 to 3, **characterized in that** the upper cross member (5) is a closed hollow profile section or an open profile section, made of metal or of metal partially covered with polymer material.

5. Structure (1) according to any one of Claims 1 to 4, **characterized in that** the upper cross member (5) comprises a longitudinal reinforcing insert (15) at least partially covered with polymer material (30), the said reinforcing insert (15) defining a concave open transverse section, and **in that** each end of the cross member has, on the inside of its concavity, a spacer (16) assembled with the reinforcing insert (12) by the polymer material (30), the said spacer (16) defining an orifice for the passage of an element for fixing the cross member to the housing.

6. Structure (1) according to Claim 5, **characterized in that** the spacer (16) is held by ribs (34) of polymer material.

7. Structure (1) according to any one of the preceding claims, **characterized in that** the lateral uprights (2, 3) and the lower cross member (14) of the one-piece assembly each comprise a longitudinal reinforcing insert (12, 13, 14), the said reinforcing inserts being assembled by a polymer material at least partially covering them.

8. Vehicle comprising a technical front end module structure (1) according to any one of Claims 1 to 7.
